# EUROPÄISCHE PATENTANMELDUNG

(11) **EP 2 775 183 A2**
(43) Veröffentlichungstag der Anmeldung: **10.09.2014**
(21) Anmeldenummer: 14154824.8
(22) Anmeldetag: 12.02.2014
(51) Int. Cl.: F16K 99/00

(54) **Mikrofluidisches Drehventil**

(30) Priorität: 04.03.2013 DE 102013203656
(71) Anmelder: ROBERT BOSCH GMBH, 70442 Stuttgart (DE)
(72) Erfinder: Daub, Martina, 71287 Weissach (DE); Brettschneider, Thomas, 71229 Leonberg (DE)

(57) **Zusammenfassung**

Die Erfindung betrifft ein mikrofluidisches Drehventil, welches zumindest ein Membranventil (20) und ein drehbares Aktuierungsmittel aufweist, wobei ein Teil des Aktuierungsmittels mit der Membran (12) des zumindest einen Membranventils (20) zusammenwirkt, um ein Öffnen des Membranventils (20) zu verhindern.

## Beschreibung

### Stand der Technik

Lab-on-a-Chip-Systeme (LoC-Systeme) haben das Potential, molekulardiagnostische Laboranwendungen zu miniaturisieren. Neben Kosteneinsparungen und einer Reduzierung der Fehleranfälligkeit ergibt sich damit die Möglichkeit, die Verwendung moderner Diagnostikmethoden vom Großlabor über die Arztpraxis bis hin zum Patienten nach Hause zu erweitern.

Um komplexe mikrofluidische Abläufe auf dem LoC zu steuern (zum Beispiel für das kontrollierte Füllen von mikrofluidischen Kavitäten oder das Mischen verschiedener Fluide), sind Ventile unerlässlich.

Die DE 10 2008 002675 A1 beschreibt einen Ansatz, bei dem mechanisch aktuierbare Drehventile verwendet werden, welche durch Kanäle in der Stirnfläche vorher definierte Pfade zwischen darunterliegenden Durchgangslöchern herstellen. Durch eine entsprechende Anordnung der Kanäle und Durchgangslöcher lassen sich auf diese Weise mit einem einzigen Drehventil mehrere verschiedene Zustände schalten.

### Vorteile der Erfindung

Das in dem Anspruch 1 definierte mikrofluidische Drehventil weist gegenüber herkömmlichen Lösungen den Vorteil auf, dass der Aufwand für das Abdichten der Schnittstelle zwischen dem Aktuierungsmittel und dem Membranventil wesentlich verringert wird. Im Gegensatz zu bekannten Drehventilen, bei denen die fluidische Abdichtung direkt an einer Grenzfläche des drehbar gelagerten Elements stattfinden muss, und bei denen die Kanäle an der Stirnfläche geschlossen werden, wobei hierzu spezielle Materialien verwendet werden, die besonders glatt sind und eine gute Dichtwirkung aufweisen, ist bei dem erfindungsgemäßen mikrofluidischen Drehventil keine Abdichtung an der Grenzfläche des drehbar gelagerten Aktuierungsmittels und, insbesondere des Aktuierungselements, notwendig, da dieses lediglich zur mechanischen Aktuierung (bevorzugt das Schließen) von dem Membranventil genutzt wird, und das Membranventil selbst abgedichtet ist. Es kann also auf die Verwendung spezieller Materialien oder Dichtlippen verzichtet werden, wodurch sich niedrigere Produktionskosten durch eine vereinfachte Herstellung und Montage des vorliegenden mikrofluidischen Drehventils ergeben.

Für die Realisierung des erfindungsgemäßen mikrofluidischen Drehventils bietet insbesondere die Verwendung eines polymeren Schichtaufbaus in Verbindung mit einer Polymermembran oder einer Polymerfolie für die einzelnen Membranventile wesentliche Vorteile im Hinblick auf deren kostengünstige Herstellung. Die Polymermembran kann zum Beispiel aus einem Elastomer, einem thermoplastischen Elastomer, Thermoplasten, einer Heißklebefolie oder einer geschichteten Kombination aus den vorstehend genannten Materialen gebildet sein. Die Dicke einer Polymermembran eines Membranventils kann zwischen 5 µm bis 500 µm betragen. Das Polymersubstrat sowie das Aktuierungsmittel können aus Thermoplasten, wie zum Beispiel PC, PP, PE, PMMA, COP, COC gebildet sein. Die Dicke der Polymersubstrate kann zwischen 0,1 mm bis 10 mm betragen. Der Durchmesser der Kanäle zur Verbindung mit einer Pumpkammer eines Membranventils in einem Polymersubstrat kann zwischen 200 µm bis 3 mm betragen.

Gemäß einer weiteren Ausgestaltung des erfindungsgemäßen mikrofluidischen Drehventils ist der Teil des Aktuierungsmittels, welcher mit dem zumindest einen Membranventil zusammenwirkt, ein Aktuierungselement, welches als eine Scheibe ausgebildet ist. Somit wird für das Öffnen oder Schließen des Membranventils keine Dichtung oder ein Zusammenwirken eines fluidischen Kanals des Membranventils in Richtung mit dem Aktuierungsmittel mehr benötigt, wodurch die Konstruktion und Herstellung des mikrofluidischen Drehventils wesentlich vereinfacht wird. Generell kann das Aktuierungsmittel einen zylindrischen Körper aufweisen, welcher einen Durchmesser von 1 mm bis 10 mm, insbesondere 5 mm bis 10 mm, besitzt. Des Weiteren kann ein Durchmesser des scheibenförmigen Aktuierungselements 5 mm bis 50 mm betragen.

Gemäß einer weiteren Ausgestaltung des erfindungsgemäßen mikrofluidischen Drehventils erstreckt sich ausgehend von einer Oberfläche der Scheibe das Aktuierungselement, insbesondere als ein Stegelement, zusätzlich mit einer vorbestimmten Höhe in Richtung zu dem mindestens einen Membranventil. Besonders vorteilhaft ist die Ausbildung des Aktuierungselements als ein Stegelement, da bei dieser Gestaltung die Membran des Membranventils während des Schließens im Wesentlichen linienförmig belastet wird, wodurch die Dichtigkeit des mikrofluidischen Drehventils auf einfache Weise sichergestellt wird.

Gemäß einer weiteren Ausgestaltung des erfindungsgemäßen mikrofluidischen Drehventils ist der Teil des Aktuierungsmittels, welcher mit dem zumindest einen Membranventil zusammenwirkt, ein Aktuierungselement, welches in der Art eines Sektors einer Scheibe ausgebildet ist. Somit wird wiederum für das Öffnen oder Schließen des Membranventils keine Dichtung oder ein Zusammenwirken eines fluidischen Kanals in Richtung zu dem Membranventil mit dem Aktuierungsmittel mehr benötigt, wodurch die Konstruktion und Herstellung des mikrofluidischen Drehventils wesentlich vereinfacht wird. Des Weiteren ergibt sich zusätzlich der Vorteil, dass bei einer Vielzahl von Aktuierungselementen an dem Aktuierungsmittel diese voneinander entkoppelt sind, wodurch beim Drehen des Aktuierungsmittels aus einer geschlossenen Stellung eines Membranventils die Verformung der einzelnen Aktuierungselemente sich nicht auf die anderen Aktuierungselemente überträgt und somit die Dichtheit der aktuierten Membranventile verbessert. Ein Radius eines Sektors für das Aktuierungselement kann 2 mm bis 25 mm betragen. Des Weiteren kann ein mikrofluidisches Drehventil mehrere Aktuierungselemente in der Art eines Sektors einer Scheibe aufweisen, wobei jede Unterseite der Aktuierungselemente im Wesentlichen in einer Ebene angeordnet ist, welche senkrecht zur Drehachse des Aktuierungsmittels ist.

Gemäß einer weiteren Ausgestaltung des erfindungsgemäßen mikrofluidischen Drehventils erstreckt sich ausgehend von einer Oberfläche des Sektors der Scheibe das Aktuierungselement, insbesondere als ein Stegelement, zusätzlich mit einer vorbestimmten Höhe in Richtung zu dem mindestens einen Membranventil.

Gemäß einer weiteren Ausgestaltung des erfindungsgemäßen mikrofluidischen Drehventils erstreckt sich das Aktuierungselement zusätzlich sowohl ausgehend von dessen Unterseite als auch ausgehend von dessen Oberseite jeweils zumindest mit einer vorbestimmten Höhe, insbesondere als ein Stegelement, welches für das Zusammenwirken mit jeweils einem Membranventil vorgesehen ist, wobei zumindest ein Membranventil oberhalb des Aktuierungselements und zumindest ein Membranventil unterhalb des Aktuierungselements ausgebildet ist. Hierdurch wird eine platzsparende Anordnung von mehreren Membranventilen in einem mikrofluidischen Drehventil realisiert, da die Membranventile in unterschiedlichen Ebenen in Bezug auf das Aktuierungsmittel angeordnet sind und gleichzeitig von einem einzigen Aktuierungsmittel betätigbar sind. Die Anordnung der Membranventile in den einzelnen Ebenen in Bezug auf das Aktuierungsmittel kann dabei spiegelbildlich oder beliebig sein.

Gemäß einer weiteren Ausgestaltung des erfindungsgemäßen mikrofluidischen Drehventils ist angrenzend an das zumindest eine Membranventil eine Fase vorgesehen, wobei das Aktuierungselement beim Drehen des Aktuierungsmittels mit der Fase zusammenwirkt. Wird zum Öffnen eines Membranventils das Aktuierungsmittel aus der aktuellen Stellung gedreht, so kann das Aktuierungselement beim Verlassen des Bereichs des Membranventils von der Fase in Richtung von dem Membranventil weg bewegt werden, wodurch zum einen der Kraftaufwand für das Weiterbewegen verringert wird, und zum anderen eine elastische Verformung des Aktuierungselements durch dessen Anheben mit Hilfe der Fase stetig und im Wesentlichen ruckfrei erfolgt.

Gemäß einer weiteren Ausgestaltung des erfindungsgemäßen mikrofluidischen Drehventils ist das Aktuierungsmittel in einem Polymersubstratsystem des mikrofluidischen Drehventils drehbar gelagert und realisiert zusammen mit dem Polymersubstratsystem eine Festlagerung des Aktuierungsmittels. Dies führt in vorteilhafter Weise dazu, dass das Aktuierungsmittel bei dessen Drehen seine axiale Position nicht ändert und somit eine zuverlässige Funktion des Drehventils sichergestellt ist. Zusätzlich dazu kann das Aktuierungsmittel ein flanschartiges Element aufweisen, welches sich in radialer Richtung um den äußeren Umfang des Aktuierungsmittels bis zu einem vorbestimmten Durchmesser erstreckt, und dabei als ein Anschlag für das Aktuierungsmittel in Verbindung mit dem Polymersubstratsystem wirkt.

Gemäß einer weiteren Ausgestaltung des erfindungsgemäßen mikrofluidischen Drehventils kann das Aktuierungsmittel mehrere Aktuierungselemente, insbesondere als Stegelemente, aufweisen, welche in Bezug auf die Drehachse des Aktuierungsmittels in radialer Richtung unterschiedlich weit von der Drehachse des Aktuierungsmittels beabstandet sind. Dabei können an einem einzelnen Aktuierungselement mehrere Stegelemente ausgebildet sein, welche in Bezug auf die Drehachse des Aktuierungsmittels in radialer Richtung unterschiedlich weit von der Drehachse des Aktuierungsmittels beabstandet sind und/oder in Umfangsrichtung des Aktuierungselements unterschiedlich weit voneinander beabstandet sind.

Gemäß einer weiteren Ausgestaltung des erfindungsgemäßen mikrofluidischen Drehventils weist das Aktuierungsmittel im Bereich eines Längsendes eine Ausnehmung auf, welche zum Drehen des Aktuierungsmittels vorgesehen ist. Die Ausnehmung kann beispielsweise in der Art eines Schlitzes bzw. einer Einkerbung ausgebildet sein, welcher/welche sich im Bereich der Drehachse quer durch das Aktuierungsmittel erstreckt. Alternativ dazu kann die Ausnehmung in der Art einer Bohrung ausgebildet sein, welche sich quer durch das Aktuierungsmittel erstreckt. Die Ausnehmung ist dafür vorgesehen, um für das Drehen des Aktuierungsmittels mit einer Drehvorrichtung zusammenzuwirken, welche eine Drehbewegung in das Aktuierungsmittel einleitet. Die Drehvorrichtung kann manuell betätigt werden oder mittels einer Steuereinrichtung erfolgen.

Gemäß einer weiteren Ausgestaltung des erfindungsgemäßen mikrofluidischen Drehventils weist das zumindest eine Membranventil auf der dem Aktuierungselement gegenüber liegenden Seite einen Membransteg auf, wobei der Membransteg beim Schließen des zumindest einen Membranventils mit dem Aktuierungselement zusammenwirkt. Für das Schließen eines Membranventils genügt es somit, dass das Stegelement und der Membransteg zusammenwirken, insbesondere dass diese übereinander positioniert sind, wodurch die Verwendung von Dichtmitteln in einem mikrofluidischen Kanal oder dem Membranventil bei dem erfindungsgemäßen mikrofluidischen Drehventil in vorteilhafter Weise entfallen.

Gemäß einer weiteren Ausgestaltung des erfindungsgemäßen mikrofluidischen Drehventils ist das Aktuierungselement verformbar, und ist dazu vorgesehen, beim Drehen des Aktuierungsmittels aus dem Bereich des zumindest einen Membranventils elastisch verformt zu werden. Auf diese Weise kann das Aktuierungselement beim Verlassen des Bereichs des Membranventils in Richtung von dem Membranventil weg bewegt werden, wodurch zum einen der Kraftaufwand für das Weiterbewegen verringert wird, und zum anderen die elastische Verformung des Aktuierungselements es ermöglicht, dass das Aktuierungselement unterschiedlichen Oberflächengestaltungen des mikrofluidischen Drehventils während des Drehens des Aktuierungsmittels folgt und dabei eine lange Lebensdauer für das Aktuierungsmittel realisiert.

Des Weiteren wird ein Verfahren zum Betreiben eines mikrofluidischen Drehventils beansprucht, welches zumindest ein Membranventil und ein drehbares Aktuierungsmittel aufweist, aufweisend den Schritt des Zusammenwirkens eines Teils des Aktuierungsmittels mit der Membran des zumindest einen Membranventils, um ein Öffnen des Membranventils zu verhindern.

Das beanspruchte Verfahren weist den Vorteil auf, dass es für das Schließen eines Membranventils somit genügt, dass ein Teil des Aktuierungsmittels, insbesondere in der Form eines Stegelements, und das Membranventil zusammenwirken, insbesondere dass diese übereinander positioniert sind, um ein Öffnen des Membranventils zu verhindern, wodurch die Verwendung von Dichtmitteln in einem mikrofluidischen Kanal oder dem Membranventil bei dem erfindungsgemäßen mikrofluidischen Drehventil in vorteilhafter Weise entfallen kann. Aufgrund dieser Vereinfachung in der Funktionsweise des zugehörigen erfindungsgemäßen mikrofluidischen Drehventils ergeben sich für das LOC niedrigere Kosten sowie eine erhöhte Zuverlässigkeit des Membranventils.

Die benötigten Strukturen in den Polymersubstraten und -membranen können beispielsweise durch Fräsen, Spritzguss, Heißprägen, Stanzen oder Laserstrukturierung hergestellt werden.

### Kurze Beschreibung der Zeichnungen

Die vorliegende Erfindung wird anhand der beiliegenden Zeichnungen erklärt. Es zeigt dabei
Fig. 1: eine Draufsicht eines erfindungsgemäßen mikrofluidischen Drehventils einer ersten Ausführungsform der vorliegenden Erfindung,
Fig. 2: eine Schnittansicht des mikrofluidischen Drehventils von Fig. 1 entlang der Linie A-A',
Fig. 3: eine Schnittansicht des mikrofluidischen Drehventils von Fig. 1 entlang der Linie B-B',
Fig. 4: eine Draufsicht eines Aktuierungsmittels für ein mikrofluidisches Drehventil gemäß einer zweiten Ausführungsform der vorliegenden Erfindung, und
Fig. 5: eine Schnittansicht eines mikrofluidischen Drehventils gemäß einer dritten Ausführungsform der vorliegenden Erfindung.

### Ausführungsformen der Erfindung

Unter einem (Zulauf)kanal soll eine Struktur verstanden werden, welche eine röhrenartige Verbindung realisiert, und kann zum Beispiel als ein (mikrofluidischer) Strömungskanal in einem (Polymer)Schichtaufbau oder als eine separate Leitung, zum Beispiel in der Art eines Schlauchs oder eines Röhrchens, ausgebildet sein.

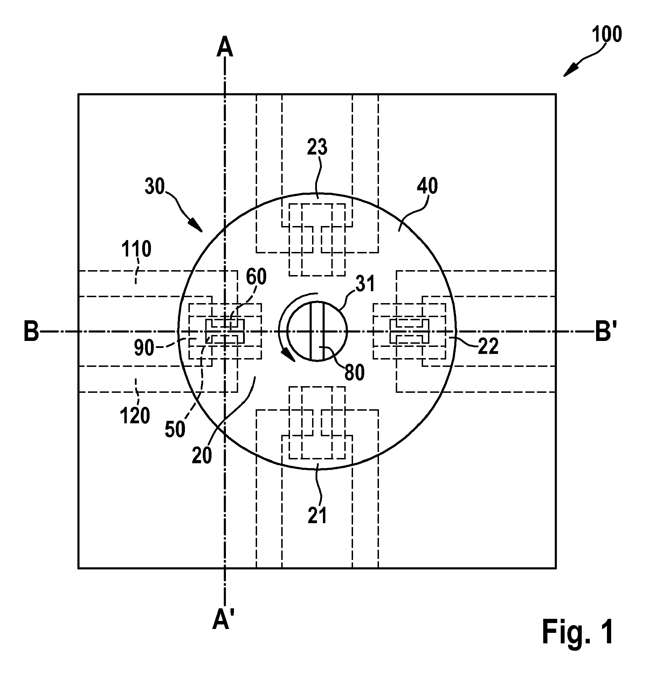

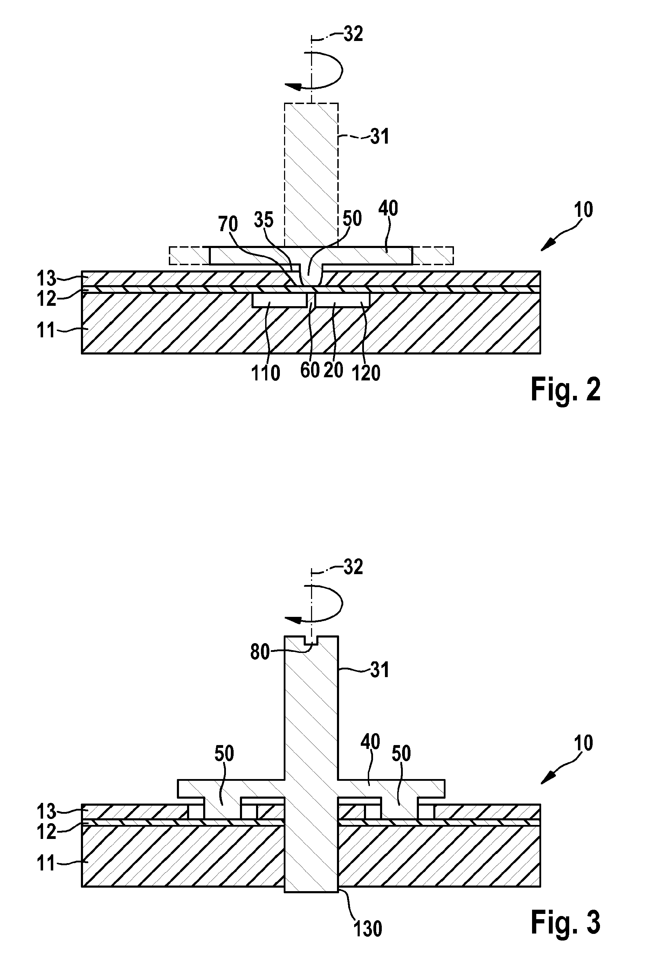

Im Folgenden wird eine erste Ausführungsform eines erfindungsgemäßen mikrofluidischen Drehventils in Verbindung mit den Figs. 1 bis 3 beschrieben werden. Fig. 1 zeigt eine Draufsicht eines erfindungsgemäßen mikrofluidischen Drehventils 100, Fig. 2 eine Schnittansicht des mikrofluidischen Drehventils von Fig. 1 entlang der Linie A-A' und Fig. 3 zeigt eine Schnittansicht des mikrofluidischen Drehventils von Fig. 1 entlang der Linie B-B'.

Das erfindungsgemäße mikrofluidische Drehventil 100 weist ein Polymersubstratsystem 10 auf, welches ein oberes Polymersubstrat 13, ein unteres Polymersubstrat 11 und eine dazwischen liegend angeordnete flexible Polymermembran 12 umfasst.

In der Mitte des mikrofluidischen Drehventils 100 ist ein Aktuierungsmittel 30 angeordnet, welches mit einer Vielzahl von Membranventilen 20, 21, 22, 23 zusammenwirkt, welche in dem Polymersubstratsystem 10 ausgebildet sind, insbesondere im Bereich des unteren Polymersubstrats 11, jeweils äquivalent aufgebaut und jeweils um 90° versetzt zueinander angeordnet sind. Das Aktuierungsmittel 30 ist in dem Polymerschichtsystem 10 drehbar gelagert, und weist einen zylindrischen Körper 31 und ein scheibenförmiges Aktuierungselement 40 auf. Das scheibenförmige Aktuierungselement 40 weist im Bereich seiner Unterseite ein Stegelement 50 auf, welches sich ausgehend von der unteren Oberfläche des Aktuierungselements 40 in Richtung zu dem jeweiligen Membranventil hin erstreckt und dabei in einer Ausgangskonfiguration, in welcher das Membranventil geschlossen ist, mit der Polymermembran 12 des Membranventils in Kontakt steht. In der vorliegenden Ausführungsform können durch Drehung um 90° die Membranventile 20 bzw. 22 freigegeben und 21 bzw. 23 geschlossen werden.
Zur einfachen Drehung des Aktuierungsmittels 30 ist im Bereich des oberen Endes des zylindrischen Körpers 31 eine Ausnehmung in der Form einer Einkerbung 80 ausgebildet.

Im unteren Polymersubstrat 13 sind je Membranventil mikrofluidische Kanäle 110 und 120 ausgeformt, welche sich von einem Randbereich des mikrofluidischen Drehventils 100 in Richtung zu dem jeweiligen Membranventil erstrecken. Ein Kanal 110 dient hierbei als Zulauf, während der anderen Kanal 120 als Ablauf konzipiert ist, wobei die Kanäle 110, 120 jeweils mit dem Membranventil fluidisch verbunden sind.

Bezugnehmend auf Fig. 2 und 3 wird nun die Funktionsweise der ersten Ausführungsform des erfindungsgemäßen mikrofluidischen Drehventils 100 näher beschrieben werden. Diese und die nachfolgend beschriebene Ausführungsform weisen vorzugsweise laterale Abmessungen von 10 x 10 mm² bis 200 x 200 mm² des mikrofluidischen Drehventils 100 auf.

Das obere Polymersubstrat 13 weist im Bereich des Membranventils 20 eine Ausnehmung 35 auf, welche als eine Öffnung zum Ausdehnen des Membranventils 20 beim Öffnen von diesem vorgesehen ist. Im Bereich der Ausnehmung 35 ist das Stegelement 50 positioniert und wirkt hierbei für das Schließen des Membranventils 20 mit dem Membranventil 20 zusammen. Im Inneren des Membranventils 20 ist ein Membransteg 60 ausgebildet, welcher unterhalb der Polymermembran 12 angeordnet ist. Das Stegelement 60 trennt die Kanäle 110, 120 des Membranventils 20 in seinem geschlossenen Zustand voneinander. Falls das Aktuierungsmittel 30 nun aus dem Bereich des Membranventils 20 bewegt wird, so kann sich bei einem Überdruck im Kanal 110 die flexible Polymermembran 12 in Richtung der Ausnehmung 35 ausdehnen, und auf diese Weise wird eine fluidische Verbindung zwischen dem Kanal 110 zu dem Kanal 120 über den Membransteg 60 hinweg gebildet.

Im Bereich der Ausnehmung 35 des oberen Polymersubstrats 13 ist jeweils gegenüber liegend eine Fase 70 ausgebildet, welche beim Drehen des Aktuierungsmittels 30 aus dem Bereich des Membranventils 20 heraus mit dem Aktuierungselement 40 zusammenwirkt, wobei das Aktuierungselement 40 dazu vorgesehen ist, dass das Stegelement 50 beim Drehen des Aktuierungsmittels 30 um dessen Drehachse 32 an der Fase 70 entlang zusammen mit dem Aktuierungselement 40 nach oben gehoben wird, wobei sich das Aktuierungselement 40 elastisch verformt. Die Dicke des oberen Polymersubstrats 13 ist dabei so gewählt, dass die Krafteinwirkung senkrecht zum Aktuierungselement 40 und die damit verbundene Verformung des Aktuierungselements 40 durch das Anheben des Stegelements 50 unkritisch bleibt.

Wird durch ein Drehen des Aktuierungselements 40 ein Stegelement 50 über ein Membranventil 20 positioniert, so übt das Stegelement 50 eine Kraft auf den Membransteg 60 aus. Damit ist das Membranventil 20 in dieser Position des Aktuierungsmittels 30 geschlossen.

Zur einfachen Montage ist im Bereich desjenigen Endes des zylindrischen Körpers 31, welcher der Einkerbung 80 gegenüber liegt, ein Flanschelement 130 an dem zylindrischen Körper 31 ausgebildet, welcher eine kleine Verbreiterung zur Verfügung stellt, so dass der untere Teil des Aktuierungsmittels 30 von oben durch die Polymerschichten 11, 13 gesteckt werden kann und dieser automatisch in der Einführrichtung arretiert wird (sog. "Klick-Mechanismus").

Die Positionierung der einzelnen Stegelemente und der Membranventile kann je nach Anwendungsfall frei erfolgen, so dass komplexe fluidische Abläufe realisiert werden können, welche nacheinander verschiedene Stellungen des drehbaren Elements benötigen.

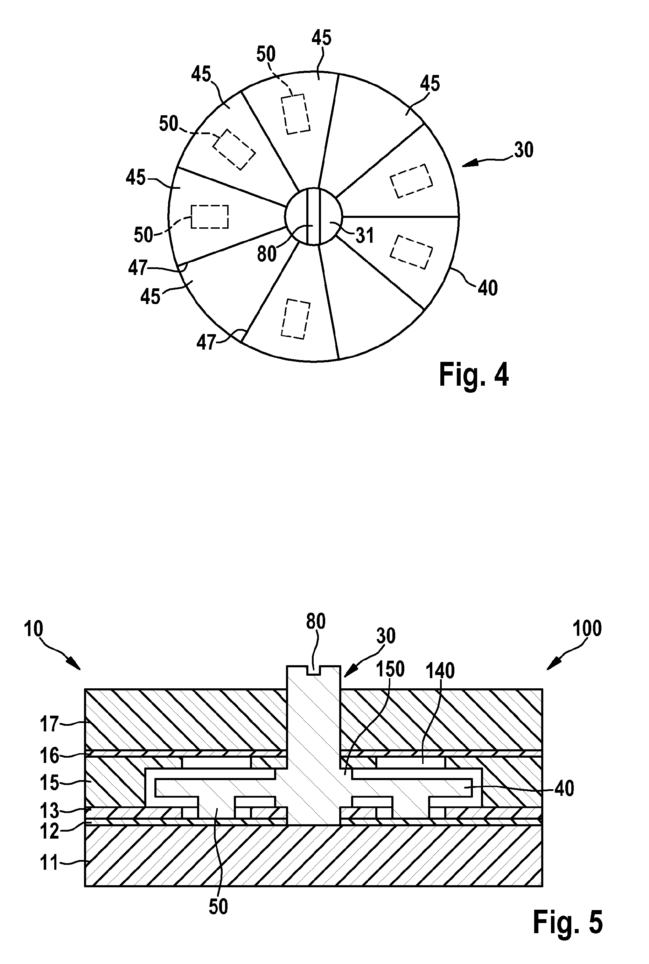

Fig. 4 zeigt eine Draufsicht eines Aktuierungsmittels 30 für ein mikrofluidisches Drehventil gemäß einer zweiten Ausführungsform der vorliegenden Erfindung. Das Aktuierungsmittel 30 weist wiederum einen zylindrischen Körper 31 auf, welcher im Bereich eines Längsendes eine Einkerbung 80 umfasst. Ausgehend von dem zylindrischen Körper 31 erstreckt sich in radialer Richtung von dem zylindrischen Körper 31 eine Vielzahl von Sektoren 45 einer Scheibe, welche alle denselben Mittelpunktswinkel aufweisen. Je ein Sektor 45 einer Scheibe bildet ein Aktuierungselement 40. Alle Sektoren 45 der Scheibe sind in einer Ebene angeordnet, welche senkrecht zu der Längsachse des Aktuierungsmittels 30 ist. Aneinander angrenzende Sektoren 45 der Scheibe sind durch ihre jeweiligen Endkanten 47 voneinander getrennt und geringfügig voneinander beabstandet. Diese Ausgestaltung der Vielzahl von Aktuierungselementen bietet den Vorteil, dass sich die Sektoren 45 der Scheibe unabhängig voneinander anheben und elastisch verformen können. Hierdurch wirken sich Verformungen eines Teilbereichs eines Aktuierungselements 40 nicht auf den Andruck eines Stegelements 50 in einem anderen Sektor 45 aus. Damit wird eine verbesserte Zuverlässigkeit durch eine noch bessere Dichtheit der aktuierten Membranventile (nicht dargestellt) erreicht.

Jedes Aktuierungselement 40 weist ein Stegelement 50 auf, welches sich in seiner Längsrichtung in radialer Richtung mit jeweils einer vorbestimmten Länge erstreckt. Die radiale Position der einzelnen Stegelement 50 für das jeweilige Aktuierungselement 40 ist ausgehend von der Drehachse des Aktuierungsmittels 30 konstant. In einer weiteren nicht dargestellten Ausführungsform können die jeweiligen Aktuierungselemente in Abhängigkeit von der geplanten Positionierung des zugehörigen Membranventils in radialer Richtung unterschiedlich von der Drehachse des Aktuierungsmittels 30 beabstandet sein. In einer weiteren nicht dargestellten Ausführungsform können pro Aktuierungselement 40 auch mehrere Stegelemente ausgebildet sein.

Fig. 5 zeigt eine Schnittansicht eines mikrofluidischen Drehventils 100 gemäß einer dritten Ausführungsform der vorliegenden Erfindung. Das mikrofluidische Drehventil 100 weist ein Polymersubstratsystem 10 auf, welches zusätzlich zu dem Polymersystem 11, 12, 13 gemäß der ersten Ausführungsform oberhalb von einem Aktuierungselement 40 eines Aktuierungsmittels 30 ein weiteres Schichtsystem aufweist, bestehend aus weiteren Polymersubstraten 15 und 17 sowie einer zweiten Polymermembran 16. Das Aktuierungselement 40 wird in einer Ausnehmung des Polymersubstrats 15 aufgenommen. Das Aktuierungselement 40 ist in der Art einer Scheibe ausgebildet, welche ausgehend von seiner oberen und unteren Oberfläche eine Vielzahl von Stegelementen 50 aufweist, welche sich bis zu einer vorbestimmten Höhe von dem Aktuierungselement 40 weg erstrecken. Fig. 5 zeigt lediglich Stegelemente 50, welche sich von der unteren Oberfläche des Aktuierungselement 40 weg erstrecken. Das Aktuierungsmittel 30 weist ebenfalls im Bereich von einem Längsende eine Einkerbung 80 auf, welche für das Drehen des Aktuierungsmittels 30 vorgesehen ist.

In dem unteren Polymersystem 11, 12, 13 und dem oberen Polymersystem 15, 16, 17 sind wiederum eine Vielzahl von Kanälen (nicht dargestellt) ausgebildet, welche fluidisch mit einem zugehörigen Membranventil (nicht dargestellt) verbunden sind. Das obere Polymersystem 15, 16, 17 weist ebenfalls eine Vielzahl von Membranventilen (nicht dargestellt) auf. In dem Polymersubstrat 15 ist im Bereich eines Membranventils eine Ausnehmung 140 ausgebildet, in welche sich die zweite Polymermembran 16 beim Aktuieren des zugehörigen Membranventils ausdehnen kann.

Diese Ausführungsform bietet insbesondere den Vorteil, dass innerhalb der gleichen Querschnittsabmessungen des mikrofluidischen Drehventils 100 mehr Ventilzustände geschaltet werden können und sich daraus größere Freiheiten für die mikrofluidische Ablaufsteuerung ergeben. Außerdem kann auf einen Flansch an dem Aktuierungsmittel 30 verzichtet werden, da nunmehr das Aktuierungsmittel 30 durch eine Verbreiterung 150 innerhalb des Polymersubstratsystems 10 gelagert und gehalten wird.

## Patentansprüche

1. Mikrofluidisches Drehventil (100), aufweisend
zumindest ein Membranventil (20),
ein drehbares Aktuierungsmittel (30), wobei ein Teil des Aktuierungsmittels (30) mit der Membran (12) des zumindest einen Membranventils (20) zusammenwirkt, um ein Öffnen des Membranventils (20) zu verhindern.

2. Mikrofluidisches Drehventil nach Anspruch 1, **dadurch gekennzeichnet, dass** der Teil des Aktuierungsmittels (30), welcher mit dem zumindest einen Membranventil (20) zusammenwirkt, ein Aktuierungselement (40) ist, welches als eine Scheibe ausgebildet ist.

3. Mikrofluidisches Drehventil nach Anspruch 2, **dadurch gekennzeichnet, dass** sich ausgehend von einer Oberfläche der Scheibe das Aktuierungselement (40), insbesondere als ein Stegelement (50), zusätzlich mit einer vorbestimmten Höhe in Richtung zu dem mindestens einen Membranventil (20) erstreckt.

4. Mikrofluidisches Drehventil nach Anspruch 1, **dadurch gekennzeichnet, dass** der Teil des Aktuierungsmittels (30), welcher mit dem zumindest einen Membranventil (20) zusammenwirkt, ein Aktuierungselement (40) ist, welches in der Art eines Sektors (45) einer Scheibe ausgebildet ist.

5. Mikrofluidisches Drehventil nach Anspruch 4, **dadurch gekennzeichnet, dass** sich ausgehend von einer Oberfläche des Sektors (45) der Scheibe das Aktuierungselement (40), insbesondere als ein Stegelement (50), zusätzlich mit einer vorbestimmten Höhe in Richtung zu dem mindestens einen Membranventil (20) erstreckt.

6. Mikrofluidisches Drehventil nach Anspruch 2 oder 4, **dadurch gekennzeichnet, dass** sich das Aktuierungselement (40) zusätzlich sowohl ausgehend von dessen Unterseite als auch ausgehend von dessen Oberseite jeweils zumindest mit einer vorbestimmten Höhe erstreckt, insbesondere als ein Stegelement (50), welches für das Zusammenwirken mit jeweils einem Membranventil vorgesehen ist, wobei zumindest ein Membranventil oberhalb des Aktuierungselements (40) und zumindest ein Membranventil unterhalb des Aktuierungselements (40) ausgebildet ist.

7. Mikrofluidisches Drehventil nach Anspruch 2 oder 4, **dadurch gekennzeichnet, dass** angrenzend an das zumindest eine Membranventil (20) eine Fase (70) vorgesehen ist, wobei das Aktuierungselement (40) beim Drehen des Aktuierungsmittels (30) mit der Fase (70) zusammenwirkt.

8. Mikrofluidisches Drehventil nach einem der Ansprüche 1 bis 7, **dadurch gekennzeichnet, dass** das Aktuierungsmittel (30) in einem Polymersubstratsystem (10) des mikrofluidischen Drehventils drehbar gelagert ist und zusammen mit dem Polymersubstratsystem (10) eine Festlagerung des Aktuierungsmittels (30) realisiert.

9. Mikrofluidisches Drehventil nach Anspruch 3 oder 5, **dadurch gekennzeichnet, dass** das Aktuierungsmittel (30) mehrere Aktuierungselemente, insbesondere als Stegelemente (50, 51, 52), aufweist, welche in Bezug auf die Drehachse (32) des Aktuierungsmittels (30) in radialer Richtung unterschiedlich weit von der Drehachse (32) des Aktuierungsmittels (30) beabstandet sind.

10. Mikrofluidisches Drehventil nach einem der Ansprüche 1 bis 9, **dadurch gekennzeichnet, dass** das Aktuierungsmittel (30) im Bereich eines Längsendes eine Ausnehmung (80) aufweist, welche zum Drehen des Aktuierungsmittels (30) vorgesehen ist.

11. Mikrofluidisches Drehventil nach einem der Ansprüche 2 bis 10, **dadurch gekennzeichnet, dass** das zumindest eine Membranventil (20) auf der dem Aktuierungselement (40) gegenüber liegenden Seite einen Membransteg (60) aufweist, wobei der Membransteg (60) beim Schließen des zumindest einen Membranventils (20) mit dem Aktuierungselement (40) zusammenwirkt.

12. Mikrofluidisches Drehventil nach Anspruch 2 oder 4, **dadurch gekennzeichnet, dass** das Aktuierungselement (40) verformbar ist, und dazu vorgesehen ist, beim Drehen des Aktuierungsmittels (30) aus dem Bereich des zumindest einen Membranventils (20) elastisch verformt zu werden.

13. Verfahren zum Betreiben eines mikrofluidischen Drehventils, mit zumindest einem Membranventil (20)
einem drehbaren Aktuierungsmittel (30), aufweisend den Schritt des:
Zusammenwirkens eines Teils des Aktuierungsmittels (30) mit der Membran (12) des zumindest einen Membranventils (20), um ein Öffnen des Membranventils (20) zu verhindern.
